# EUROPÄISCHE PATENTANMELDUNG

(11) **EP 1 382 945 A1**
(43) Veröffentlichungstag der Anmeldung: **21.01.2004**
(21) Anmeldenummer: 03016345.5
(22) Anmeldetag: 18.07.2003
(51) Int. Cl.: G01F 13/00, A47G 23/16

(54) **Vorrichtung und Verfahren zum Messen der von einer Person aufgenommenen Flüssigkeitsmenge**

(30) Priorität: 19.07.2002 DE 10232948
(71) Anmelder: Abatec-Electronic AG, 4844 Regau (AT)
(72) Erfinder: Niederndorfer, Friedrich, Dipl.-Ing., 4840 Pilsbach (AT)
(74) Vertreter: Jacoby, Georg

(57) **Zusammenfassung**

Die Erfindung betrifft eine Vorrichtung zum Messen der von einer Person in einem vorgegebenen Zeitraum, wie ein Tag, getrunkenen Flüssigkeitsmenge. Sie umfaßt ein Wägemittel (22) zum Messen des Gewichtes eines Flüssigkeitbehältnis (38) mit einer darin aufgenommenen Flüssigkeit. Sie umfaßt ferner eine mit dem Wägemittel (22) gekoppelte Auswerteeinrichtung (24), die derart eingerichtet ist, daß sie die aus dem Flüssigkeitsbehältnis (38) getrunkene Flüssigkeitsmenge anhand des gemessenen Gewichtes des Flüssigkeitsbehältnis (38) mit darin aufgenommener Flüssigkeit und anhand des gemessenen Gewichtes des vollständig oder teilweise leeren Flüssigkeitsbehältnis (38) ermittelt und daß sie die so ermittelten Flüssigkeitsmengen im vorgegebenen Zeitraum zu einer getrunkenen Gesamtflüssigkeitsmenge kumuliert. Schließlich umfaßt die Vorrichtung noch ein mit der Auswerteeinrichtung (24) gekoppeltes Ausgabemittel (20) zum Ausgeben der kumulierten Gesamtflüssigkeitsmenge. Die Erfindung betrifft ferner ein zugehöriges Steuerverfahren.

## Beschreibung

Die Erfindung betrifft eine Vorrichtung und ein Verfahren zum Messen der von einer Person aufgenommenen Flüssigkeitsmenge in einem vorgegebenem Zeitraum.

Einer der wesentlichen Faktoren für Wohlbefinden und Gesundheit stellt der tägliche Wasserbedarf dar. Dies gilt für Kleinkinder ebenso wie für Personen im hohen Alter. Aus der Literatur ist bekannt, daß jeder Mensch täglich wenigstens 2 bis 2.5 Liter Flüssigkeit zu sich nehmen sollte. Oftmals wird diese Mindestmenge jedoch nicht eingehalten. So stellt sich ein Durstgefühl erst bei erheblichem Flüssigkeitsdefizit ein, beispielsweise nach Perioden mit erhöhten Flüssigkeitsverlusten (sportliche Aktivitäten oder Tätigkeiten harter körperlicher Arbeit). Gewöhnlich nimmt der Mensch jedoch nicht wahr, daß er täglich weit weniger als die empfohlene Gesamtflüssigkeitmenge zu sich genommen hat. Chronische Kopfschmerzen oder andere Krankheiten können die Folge sein. Aus dem Stand der Technik sind daher bereits Geräte bekannt, mit denen die täglich aufgenommen Flüssigkeitsmenge bewußter verfolgt werden kann.

Die DE 196 14 815 C1 offenbart hierzu eine Meßeinrichtung in Form einer manuell drehbaren Stellscheibe, die über eine Anhängeöse an eine Getränkeflasche gehängt werden kann. Die Drehscheibe hat eine Flüssigkeitsmengenskala. Die trinkende Person dreht nach jeder Flüssigkeitsentnahme aus der Flasche die Drehscheibe um die entnommene Flüssigkeitsmenge weiter und hat damit beispielsweise über den Zeitraum eines Tages einen Überblick über die insgesamt getrunkene Flüssigkeitsmenge.

Die DE 44 25 708 A1 zeigt eine elektronische Version der zuvor diskutierten Vorrichtung zum Überwachen der von einer Person täglich getrunkenen Flüssigkeitsmenge. Die Vorrichtung umfaßt Eingabetasten, mit denen die Person nach jeder Flüssigkeitsaufnahme die aufgenommene Flüssigkeitsmenge manuell eingibt. Diese manuell eingegebene Flüssigkeitsmenge vergleicht eine eingebaute Auswerteeinrichtung mit gespeicherten Sollwerten. Anhand dieses Vergleiches wird der Person zum Ablauf eines vorgebbaren Zeitraumes angezeigt, ob sie ein Flüssigkeitsdefizit hat.

Die US 6,138,079 zeigt ein Gerät zum Ermitteln des Flüssigkeitsverlustes eines Sportlers. Der Sportler gibt hierzu persönliche Daten, wie sein Gewicht, in das Gerät ein und startet zu Beginn seiner sportlichen Aktivität die Ermittlung des persönlichen Flüssigkeitsverlustes. Das Gerät berechnet aus dem angegebenen Gewicht (sowie der gemessenen Außentemperatur und -luftfeuchtigkeit) einen durchschnittlichen Flüssigkeitsverlust und gibt dem Sportler in auswählbaren Zeitintervallen ein Warnsignal aus, den Flüssigkeitsverlust zu kompensieren. Hat der Sportler den Flüssigkeitsverlust vollständig oder teilweise kompensiert, so gibt er dies manuell in das Gerät ein, das daraufhin die eingegebene aufgenommene Flüssigkeitsmenge zu dem berechneten Flüssigkeitshaushalt des Sportlers addiert und im Betrieb weiter fortfährt.

Der Erfindung liegt die Aufgabe zugrunde, die bestehenden Vorrichtungen und Verfahren zum Messen der Flüssigkeitsaufnahme im einem vorgegebenen Zeitraum zu verbessern.

Sie löst diese Aufgabe jeweils mit den Gegenständen der Ansprüche 1 und 17. Bevorzugte Ausführungsbeispiele der Erfindung sind in den Unteransprüchen beschrieben.

Danach ist eine Vorrichtung zum Messen der von einer Person in einem vorgegebenen Zeitraum, wie ein Tag, getrunkenen Flüssigkeitsmenge geschaffen. Die Vorrichtung umfaßt ein Wägemittel zum Messen des Gewichtes eines Flüssigkeitbehältnis mit einer darin aufgenommenen Flüssigkeit. Sie umfaßt ferner eine mit dem Wägemittel gekoppelte Auswerteeinrichtung, die derart eingerichtet ist, daß sie die aus dem Flüssigkeitsbehältnis getrunkene Flüssigkeitsmenge anhand des gemessenen Gewichtes des Flüssigkeitsbehältnis mit darin aufgenommener Flüssigkeit und anhand des gemessenen Gewichtes des vollständig oder teilweise leeren Flüssigkeitsbehältnis der Flüssigkeit ermittelt, und daß sie die so ermittelten Flüssigkeitsmengen im vorgegebenen Zeitraum zu einer getrunkenen Gesamtflüssigkeitsmenge kumuliert. Schließlich umfaßt die Vorrichtung noch ein mit der Auswerteeinrichtung gekoppeltes Ausgabemittel zum Ausgeben der kumulierten Gesamtflüssigkeitsmenge. Die Erfindung betrifft ferner ein zugehöriges Steuerverfahren.

Weitere Vorteile und Merkmale der Erfindung werden nunmehr anhand eines bevorzugten Ausführungsbeispiels mit Bezug auf die beigefügte Zeichnung näher erläutert, in der:
- Fig. 1: eine schematische Draufsicht auf ein bevorzugtes Ausführungsbeispiel einer erfindungsgemäßen Vorrichtung zum Mes- sen der Flüssigkeitsaufnahme einer Person in einem vorgegebenen Zeitraum;
- Fig. 2: ein schematisches Blockschaltdiagramm eines bevorzugten Ausführungsbeispiels einer erfindungsgemäßen Vorrichtung; und
- Fig. 3.: eine schematische Seitenansicht eines Trinkbehältnis mit einer integrierten erfindungsgemäßen Vorrichtung.

Die Erfindung wird nachfolgend anhand spezieller Ausführungsbeispiele einer Vorrichtung beschrieben, welche die von einer Person in einem vorgegebenen Zeitraum getrunkenen Flüssigkeitsmenge ermittelt. Diese Beschreibung ist jedoch nicht einschränkend zu verstehen. So hat die erfindungsgemäße Vorrichtung nach einer der beschriebenen Ausgestaltungen beispielsweise die Form einer Haushaltswaage. Selbstverständlich kann die erfindungsgemäße Vorrichtung in jeder anderen Art von Gehäuse untergebracht sein, das die Messung eines Gewichtes eines Flüssigkeitsbehältnisses erlaubt. So kann das Gehäuse so ausgestaltet sein, daß es an einen Haken gehängt werden kann, wobei das Flüssigkeitsbehältnis an einer Aufnahmeeinrichtung am Gehäuse eingehängt wird und anschließend das Gewicht gemessen wird. Ferner kann sie als Untersetzer für einen Trinkbehälter (z.B. Glas-, Trinkbecheruntersetzer, etc.) ausgestaltet sein. Diese kurze Aufzählung soll die verschiedenen Möglichkeiten der konkreten Ausgestaltung der erfindungsgemäßen Vorrichtung illustrieren.

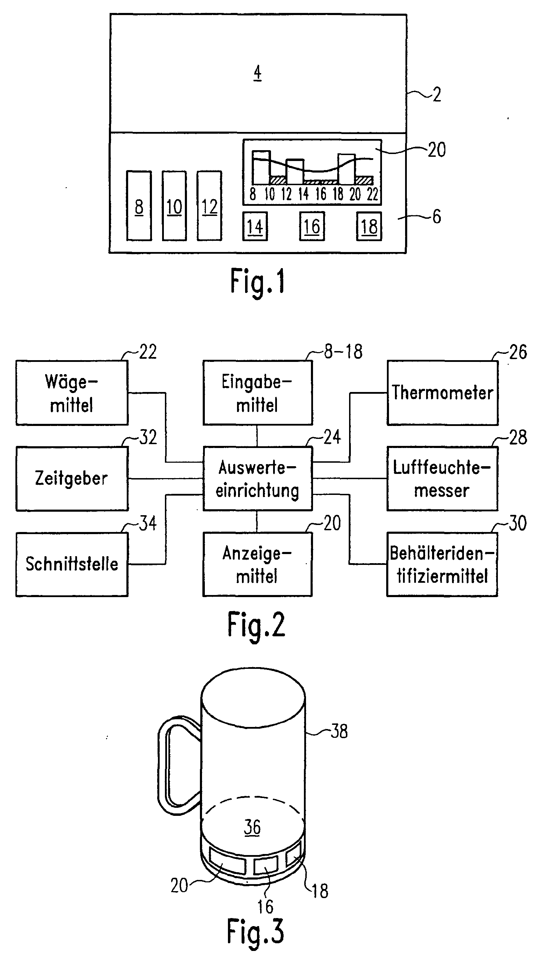

Fig. 1 zeigt eine schematische Draufsicht auf ein bevorzugtes Ausführungsbeispiel einer erfindungsgemäßen Vorrichtung zum Messen der Flüssigkeitsaufnahme einer Person in einem vorgegebenen Zeitraum, und Figur 2 ein zugehöriges schematisches Blockschaltdiagramm für die einzelnen elektronischen Komponenten einer solchen Vorrichtung. Die Vorrichtung ist nach Art einer Haushaltswaage mit einem flachen Gehäuse 2 ausgebildet, dessen Oberseite in einen Plattformbereich 4 zum Abstellen eines Flüssigkeitsbehältnis (wie ein Trinkbecher, eine Flasche, etc.) und einen Bedienbereich 6 unterteilt ist. Der Bedienbereich 6 umfaßt mehrere Eingabetasten 8 bis 18 sowie eine Bildschirmanzeige 20 (z.B. in Form einer einzeiligen LCD-Anzeige oder dergleichen). Selbstverständlich können anstelle der Eingabetasten 8-18 auch ein Mikrofon zur Sprachsteuerung der Vorrichtung und anstelle der Bildschirmanzeige 20 ein Lautsprecher zum Ausgeben von Sprachmitteilungen vorgesehen sein. Auch andere Formen der Benutzerschnittstelle zum Eingeben und Ausgeben von Information sind vorstellbar.

Unter der Plattform 4 befindet sich ein in der Fig. 1 nicht näher gezeigtes Wägemittel 22 (zum Beispiel ein Dehnungsmeßstreifen in entsprechender Verschaltung, etc.), das ein Ausgangssignal abhängig von dem auf der Plattform 4 abgestellten Gewichte liefert. Das Wägemittel 22 liefert sein Ausgangssignal über eine Verbindung an eine Auswerteeinrichtung 24. Mit der Auswerteeinrichtung 24 sind ferner ein Thermometer 26 zum Messen der Außentemperatur, ein Luftfeuchtemesser 28 zum Messen der Außenluftfeuchtigkeit und optional ein Behälteridentifiziermittel zum Identifizieren eines bestimmten auf der Plattform 4 abgestellten Flüssigkeitsbehältnis verbunden. Zudem sind die im Zusammenhang mit Fig. 1 bereits erwähnten Eingabemittel 8 bis 18 und die Bildschirmanzeige 20 mit der Auswerteeinrichtung 24 verbunden, wie auch ein Zeitgeber 32 sowie optional eine Schnittstelle 34 zum Verbinden der Auswerteeinrichtung 24 mit einer nicht näher dargestellten externen Rechnereinheit. Die Auswerteeinrichtung kann ein Prozessorbaustein mit internem Speicher sein, in den ein entsprechendes Programm geladen ist, wie es nachfolgend anhand seiner speziellen Funktionen beschrieben wird. Die Umsetzung der beschriebenen Funktionen in das entsprechende Programm liegt im Rahmen des Durchschnittskönnen des Fachmanns und wird hier nicht weiter beschrieben, zumal hierzu auch abhängig vom speziellen Prozessor eine Vielzahl von Implementierungsmöglichkeiten besteht.

Die in der Fig. 1 gezeigte erfindungsgemäße Vorrichtung ist beispielsweise für die Benutzung durch drei Personen geeignet, denen jeweils eine Eingabetaste 8, 10 oder 12 zugeordnet ist. Möchte eine der drei Personen eine bestimmte Flüssigkeitsmenge zu sich nehmen, so stellt sie einfach ihr Flüssigkeitsbehältnis mit der darin aufgenommenen Flüssigkeit auf der Plattform 4 ab. Anschließend drückt sie eine zugehörige Eingabetaste 8, 10 oder 12 (Person A drückt beispielsweise die Taste 8, Person B die Taste 10 und Person C die Taste 12). Das vom Wägemittel 22 gelieferte Meßsignal wird nun in der Auswerteeinrichtung 24 gespeichert. Dann nimmt die Person das Flüssigkeitsbehältnis von der Plattform, trinkt die darin enthaltene Flüssigkeitsmenge oder einen Teil davon, stellt das Flüssigkeitsbehältnis wieder auf die Plattform 4 und drückt nochmals die zugehörige Eingabetaste 8, 10 oder 12. Das nunmehr gemessene Gewicht wird erneut vom Wägemittel 22 in die Auswerteeinrichtung 24 eingelesen und dort gespeichert. Anschließend ermittelt die Auswerteeinrichtung 24 die Differenz der beiden gespeicherten Gewichte und dividiert die erhaltene Gewichtsdifferenz durch eine vorgegebene Flüssigkeitsdichte. Das Divisionsergebnis gibt die aus dem Flüssigkeitsbehältnis entnommene Flüssigkeitsmenge an. Selbstverständlich kann die Messung der beiden Gewichte des Flüssigkeitsbehältnis in umgekehrter Reihenfolge erfolgen. Der Benutzer stellt erst das leere Flüssigkeitsbehältnis auf die Plattform 4, läßt dessen Gewicht messen, füllt es anschließend mit Flüssigkeit und läßt dessen Gewicht erneut messen (hier wird vorausgesetzt, daß der Benutzer anschließend das Flüssigkeitsbehältnis vollständig leert). Eine Gewichtsmessung mit Speicherung des Meßwertes kann hierbei (wie bei Haushaltswaagen üblich) nach einer voreingestellten Zeitdauer (z.B. 2 Sekunden) erfolgen, nachdem keine Änderung des Meßwertes mehr gemessen wird. Zudem kann die Auswerteeinrichtung derart eingerichtet sein, daß sie das jeweils aktuell gemessene Gewicht mit einem zuvor für den gleichen Benutzer gemessenen und gespeicherten Gewicht vergleicht. Wenn das Gewicht zugenommen hat, dann folgert sie daraus, daß das Flüssigkeitsbehältnis zwischenzeitlich mit Flüssigkeit befüllt wurde. Sie verwirft dann die ermittelte Gewichtsdifferenz und speichert lediglich das zuletzt gemessene Gewicht. Erst bei einer detektierten Gewichtsabnahme des Flüssigkeitsbehältnis interpretiert sie die ermittelte Gewichtsdifferenz als Flüssigkeitsaufnahme durch den Benutzer. Wechselt der Benutzer sein Flüssigkeitsbehältnis (z.B. von einem schweren Glaskrug zu einer leichten Kunststoffflasche), so muß er dies in diesem Fall der Auswerteeinrichtung 34 über die Eingabetasten 8, 10 oder 12 mitteilen, damit diese nicht "irrtümlich" auf eine Flüssigkeitsaufnahme schließt, obwohl nur das Gewicht das Flüssigkeitsbehältnis leichter geworden ist.

Die Flüssigkeitsdichte kann beispielsweise fest in der Auswerteeinrichtung 24 gespeichert sein. Zusätzlich kann aber auch eine (für die Handhabbarkeit möglichst geringe) Anzahl unterschiedlicher Flüssigkeitsarten manuell eingegeben werden, beispielsweise durch Betätigen der Eingabetasten 14, 16 und 18 (siehe nachfolgende Ausführung zu der menügeführten Benutzerschnittstelle). Alternativ oder zusätzlich zur Eingabe unterschiedlicher Flüssigkeitsdichten können auch direkt verschiedene Flüssigkeitsarten ausgewählt werden. So besteht Mineralwasser zu nahezu 100% aus Flüssigkeit, während ein dickflüssiges Joghurt noch einen erheblichen Anteil an Feststoffen enthält, was bei der Flüssigkeitsmengenbestimmung berücksichtigt werden kann. Der Benutzer hat also die Möglichkeit, zwischen solchen unterschiedlichen Flüssigkeitsarten durch eine entsprechende Eingabe zu differenzieren.

Die Auswerteeinrichtung 24 kann so eingerichtet sein, daß sie nunmehr die gemessenen Flüssigkeitsmengen über die Zeitdauer eines Tages kumuliert. Vom Zeitgeber 32 (in der einfachsten Form kann dieser ein herkömmlicher Taktgeber mit fest vorgegebenem 24 Stunden-Zeitintervall sein) erhält sie hierzu entsprechende Zeitdaten. Beispielsweise kann (ggf. individuell für die jeweilige Person) festgelegt werden, daß zum Zeitpunkt um 6 Uhr morgens ein neuer Tag beginnen soll, zu dem die Auswerteeinrichtung 24 die zuvor gemessenen und kumulierten Flüssigkeitsmengen für alle Personen (bzw. diese individuelle Person) löscht und somit bei einer Gesamtflüssigkeitsmenge mit dem Wert Null beginnt. Führt die Person A innerhalb der nächsten 24 Stunden eine Messung der Flüssigkeitsaufnahme durch, so zeigt die Bildschirmanzeige 20 beispielsweise neben der gerade entnommenen Flüssigkeitsmenge auch die innerhalb der 24 Stunden bereits kumulierte Gesamtflüssigkeitsmenge an. Die Person A kann somit verfolgen, wieviel Flüssigkeit sie im Laufe des Tages zu sich genommen hat.

Die Auswerteeinrichtung 24 kann ferner derart eingerichtet sein, daß sie die kumulierte Gesamtflüssigkeitsmenge mit einer empfohlenen Gesamtflüssigkeitsmenge vergleicht und das Vergleichsergebnis ebenfalls auf der Bildschirmanzeige 20 ausgibt. Im einfachsten Fall kann die empfohlene Gesamtflüssigkeitsmenge eine fest für die Dauer des vorgegebenen Zeitraums (z.B. ein Tag) vorgegebene Gesamtflüssigkeitsmenge sein (z.B. 2-2.5 Liter). Wenn die kumulierte Gesamtflüssigkeitsmenge noch unterhalb der empfohlenen Gesamtflüssigkeitsmenge liegt, kann die Bildschirmanzeige z.B. bei jeder erneuten Messung einer Flüssigkeitsentnahme rot leuchten (als Hinweissignal für einen Flüssigkeitsdefizit), während sie bei Überschreiten der empfohlenen Gesamtflüssigkeitsmenge grün leuchtet. Alternativ kann auch ein Prozentbalken angezeigt werden, der den relativen Anteil der aufgenommenen zur empfohlenen Gesamtflüssigkeitsmenge darstellt. Für die Darstellung des Vergleichsergebnis gibt es selbstverständlich andere, hier nicht näher beschriebene Möglichkeiten.

Die Auswerteeinrichtung 24 kann die empfohlene Gesamtflüssigkeitsmenge auch individuell berechnen. Hierzu gibt die entsprechende Person über die Eingabetasten 14, 16 und 18 Daten über ihre Person ein. Die durch die Bildschirmanzeige 20 und die Eingabetasten 8-18 gebildete Benutzerschnittstelle kann beispielsweise menügeführt sein. Mit den Eingabetasten 16 und 18 kann sie durch die verschiedenen Menüpunkte einer Menüebene hin- und herschalten. Die Eingabetaste 14 könnte (zusammen mit der Eingabetaste 8 für die Person A) als Auswahltaste zum Hin- und Herschalten zwischen den einzelnen Menüebenen dienen. So kann die Person A beispielsweise durch erstmaliges Betätigen ihrer zugehörigen Taste 8, Betätigen der Eingabetaste 14, um in einen Programmiermodus zu gelangen, und durch anschließendes Betätigen der Eingabetasten 8, 14, 16 und 18 zum Durchlaufen des Menübaumes Daten über ihre Person eingeben. Diese Daten können das Alter, das Gewicht, das Geschlecht, die Tätigkeit (Berufstätigkeit, wie Unterscheidung zwischen Bürojob oder mit körperlicher Arbeit verbundene Berufe, Tagestätigkeiten, wie Unterscheidung zwischen einem sportlichen Tag oder einem Tag mit ruhiger Betätigung, etc.) und/oder die Aufsteh- und Einschlafzeit der Person A betreffen. Das Alter kann die Person A in einem bestimmten Menüpunkt eingeben, bei dessen Auswahl durch die Eingabetaste 14 z.B. ein Balken erscheint, der mit den Eingabetasten 16 und 18 nach links und rechts verschoben werden kann und das jeweilige Alter darstellt. Entsprechendes gilt auch für die Eingabe der übrigen genannten Daten. Selbstverständlich sind die hier aufgeführten Daten nicht abschließend. Vielmehr können weitere für die Ermittlung einer empfohlenen Gesamtflüssigkeitsmenge erforderlichen Daten auf die beschriebene Weise eingegeben werden. Darüber hinaus können alternativ zu der beschriebenen Eingabeweise der Daten auch andere Eingabemöglichkeiten vorgesehen sein.

Die Auswerteeinrichtung 24 berechnet nunmehr anhand der eingegebenen Information über die Person A und (optional) anhand der vom Thermometer 26 und Luftfeuchtemesser 28 übermittelten Meßdaten über die Außentemperatur und die Außenluftfeuchtigkeit eine empfohlene Gesamtflüssigkeitsmenge. Für diese Berechnung wird auf die einschlägige Li-. teratur verwiesen. Lediglich beispielhaft wird nachfolgend kurz eine solche Berechnungsmöglichkeit skizziert. Es wird angenommen, daß die Person abhängig von ihrer angegebenen Tätigkeit einen bestimmten Energieverbrauch pro Zeiteinheit und pro Lebendkörpergewicht hat (z.B. 70 kcal/h bei sportlicher Betätigung), der zum Teil als Wärme in die Umgebung abgegeben wird. Diese Wärmeabgabe erfolgt neben anderen Faktoren durch Schweißaussonderung. Die durch die Verdunstung des ausgesonderten Schweißes entstehende Verdunstungskälte hält die Körpertemperatur auf dem erforderlichen Wert (z.B. 37°). Mit dem bekannten Wert für die latente Verdunstungswärme von Wasser kann durch Division des zeitlichen Energieverbrauches im Körper durch diesen Wert der zeitliche Flüssigkeitsverlust berechnet werden. Über die Zeit summiert ergibt dies die Gesamtflüssigkeitmenge, die der Mensch während seiner Tätigkeit verliert. Dieser Wert gibt einen ersten Anhaltspunkt für die empfohlene Gesamtflüssigkeitsmenge, die Person A während des Zeitraums zu sich nehmen sollte. Weiterhin kann die Außentemperatur und Außenluftfeuchtigkeit berücksichtigt werden, wobei eine steigende Außentemperatur und steigende Luftfeuchtigkeit auch einen Anstieg des Flüssigkeitsverlustes zur Folge hat. Wie genau der Flüssigkeitsverlust von der steigenden Außentemperatur und -luftfeuchtigkeit abhängt, hängt vom zugrundegelegten Körpermodell ab. Weitere Korrekturfaktoren für den angenommenen Flüssigkeitsverlust sind durch das Alter, das Geschlecht und die Aufsteh- und Einschlafzeit der Person gegeben. So nimmt beispielsweise der Flüssigkeitsbedarf im Alter zu. Ferner ist der Flüssigkeitsverlust während der Schlafenszeit geringer als in der Wachzeit.

Sollte die Person A im Laufe des Tages weitere Flüssigkeit zu sich genommen zu haben, ohne diese gemessen zu haben, so kann sie über die Eingabetasten 14, 16 und 18 die so getrunkene Flüssigkeitsmenge nachträglich manuell in das Gerät eingeben. Die Auswerteeinrichtung 24 addiert die so eingegebene Flüssigkeitsmenge zu der bislang kumulierten Gesamtflüssigkeitsmenge und vergleicht das Ergebnis mit der empfohlenen Gesamtflüssigkeitsmenge. Ferner kann die Auswerteeinrichtung 24 auch den zeitlichen Verlauf der Flüssigkeitsaufnahme über den Tag verteilt ausgeben. Auf dem Anzeigebildschirm 20 kann hierzu beispielsweise eine Balkenanzeige dargestellt werden, wobei die Position jedes Balkens einer (oder mehrerer) Stunde(n) des Tages entspricht und die Balkenhöhe die in dieser Stunde getrunkene Flüssigkeitsmenge angibt. Genauere medizinische Untersuchungen haben ergeben, daß nicht nur die täglich aufgenommene Gesamtflüssigkeitsmenge eine Rolle für das Wohlbefinden und die Gesundheit spielen, sondern auch deren Verteilung über den Tag. So kann die Auswerteeinrichtung 24 zusätzlich eine solche tägliche Verteilungskurve aus den eingegebenen persönlichen Daten ermitteln und auf der Bildschirmanzeige 20 als Sollwert darstellen. Die Darstellung kann z.B. eine in das Balkendiagramm der Verteilung der Flüssigkeitsaufnahme gelegte Kurve sein (siehe schematische Darstellung in Figur 1). Zusätzlich können die Balken in einer anderen Farbe (in Figur 1 gestrichelt) dargestellt werden, zu deren Zeitpunkten nicht die vorgeschriebene Flüssigkeitsmenge aufgenommen wurde.

Die Auswerteeinrichtung 24 kann ferner die gespeicherten Meßdaten über die Schnittstelle 34 an eine externe Rechnereinheit übertragen. So kann die Rechnereinheit ein internetfähiger Computer sein, der die erhältenen Meßdaten an eine entsprechende Website (oder ein anderes z.B. beim Hersteller der erfindungsgemäßen Vorrichtung angesiedeltes Anwenderprogramm) versenden, wo die Flüssigkeitsaufnahme nach verfeinerteren Gesichtspunkten bewertet werden kann. Die Person A kann damit stichprobenartig ihre Daten über die täglich gemessenen Flüssigkeitsaufnahmen an ein externes Internetprogramm versenden, und erhält eine Auswertung ihrer Daten hinsichtlich der richtigen Flüssigkeitsaufnahme zurück. Alternativ kann ein entsprechendes Programm auch auf der externen Rechnereinheit geladen sein, mit der verfeinerte (oder stets aktualisierte) Berechnungsmethoden zur Bewertung der aufgenommenen Flüssigkeitsmenge durchgeführt werden können. Die externe Rechnereinheit kann auch jede Art von portabler Computer sein (elektronischer Organizer, Handheld (Palm, etc.), Handy, etc.), und die Schnittstelle 34 beispielsweise eine Infrarotschnittstelle. Zudem kann die Schnittstelle 34 auch genutzt werden, aktualisierte Steuerprogramme in die Auswerteeinrichtung 4 zu laden (die z.B. über das Internet bezogen wird). An die Schnittstelle 34 können ggf. weitere externe Meßeinrichtungen angeschlossen werden, wie ein Herzfrequenzmesser, der Daten über die aktuelle und/oder eine über vorgegebene Zeitintervalle zeitlich gemittelte Herzfrequenz an die Auswerteeinrichtung 24 überträgt, die aus diesen Daten die empfohlene Gesamtflüssigkeitsmenge ermittelt.

Für einen längeren Zeitraum (beispielsweise eine Woche oder einen Monat) kann ebenfalls eine durchschnittliche aufgenommene Flüssigkeitsmenge berechnet und ausgegeben werden. Alternativ oder zusätzlich zur Ausgabe der kumulierten Gesamtflüssigkeitsmenge kann auch Durchschnittswert für die aufgenommene Flüssigkeitsmenge in einem vorgegebenen Zeitraum (z.B. 1 Stunde) ermittelt, angezeigt und mit einem empfohlenen Durchschnittswert verglichen werden. Nachstehend wird ein Beispiel für eine solche Ausgabe näher beschriebenen. Aus dem Zeitraum zwischen Aufsteh- (z.B. 8am) und Einschlafzeit (z.B. (22pm) ermittelt die Auswerteeinrichtung 24 eine Gesamtzeit (z.B. 14 Stunden). Weiter ermittelt sie für diese Gesamtzeit eine empfohlene Gesamtflüssigkeitsmenge (z.B. 2 Liter). Division der empfohlenen Gesamtflüssigkeitsmenge durch die Gesamtzeit und Multiplikation mit dem Ermittlungszeitraum (z.B. 1 Stunde) ergibt die durchschnittlich im Ermittlungszeitraum zu trinkende Flüssigkeitsmenge (z.B. 0.14 Liter/Stunde). Eine optische und/oder akustische Ausgabe zeigt an, ob im Ermittlungszeitraum weniger getrunken wurde, oder genug. Der Ermittlungszeitraum für die Addition oder Mittelwertbildung der Flüssigkeitsaufnahme kann über die Eingabetasten 14, 16 und 18 eingestellt werden.

Anstelle oder zusätzlich zu den Eingabetasten 8 bis 12 kann die Vorrichtung auch ein bestimmtes (einer Person zugeordnetes) Flüssigkeitsbehältnis über ihr Behälteridentifiziermittel 30 identifizieren. Hierzu weist das Flüssigkeitsbehältnis beispielsweise einen eigenen Chip oder dergleichen auf, dessen Identifikation vom Behälteridentifiziermittel 30 z.B. über Funk ausgelesen wird. Damit entfällt die Eingabe für die Auswahl der Person, welche gerade die Vorrichtung zu einer Messung der entnommenen Flüssigkeitsmenge benutzt. Selbstverständlich kann die Vorrichtung auch nur für einen Ein-Personen-Betrieb ausgestaltet sein.

Schließlich muß auch nicht unbedingt eine separate Eingabetaste vorgesehen werden, mit der der Benutzer jeweils die Messung unterscheidet, ob das Gewicht vor oder nach Flüssigkeitsentnahme aus dem Flüssigkeitsbehältnis gemessen werden soll. Wie oben bereits ausgeführt, kann beim ersten Abstellen des Flüssigkeitsbehältnis die Messung mit darin aufgenommener Flüssigkeit durchgeführt werden und nach einem erneuten Abstellen die Messung nach Entnahme der Flüssigkeit. Das Wägemittel 22 bzw. die Auswerteeinrichtung 24 erkennt automatisch das Abstellen und Entnehmen eines Flüssigkeitsbehältnis aufgrund der dabei entstehenden Gewichtsänderung. Eine entsprechende Anzeige auf der Bildschirmanzeige 20 kann die Meßart anzeigen, damit keine Gefahr einer Verwechslung auftritt.

In einer besonders einfach ausgestalteten Ausführungsform kann auch überhaupt kein Eingabemittel vorgesehen werden, und die Bildschirmanzeige 20 durch eine einfache Anzeigelampe (LED, etc.) ersetzt werden. Solange die kumulierte Gesamtflüssigkeitsmenge unter der empfohlenen Gesamtflüssigkeitsmenge liegt, leuchtet das Anzeigemittel z.B. rot, und im anderen Fall grün. Damit eignet sich diese Vorrichtung auch besonders für die Integration in ein Flüssigkeitsbehältnis, wie dies schematisch in der Fig. 3 dargestellt ist. Dort sind unterhalb eines Bodenabschnitts 36 des Flüssigkeitsbehältnis 38 die gesamte Elektronik samt Wägemittel 22 integriert. Unter dem Bodenabschnitt kann beispielsweise ein etwas leichter verformbares Material angebracht sein, an dem an geeigneter Stelle Dehnungsmeßstreifen zur Messung des Gewichtes des Flüssigkeitsbehältnis 38 angebracht sind. In der Fig. 3 sind weiterhin noch die Bildschirmanzeige 20 und zwei Eingabetasten 16 und 18 im genannten Bodenbereich des Flüssigkeitsbehältnis 38 angeordnet, die eine ähnliche Funktion wie im Ausführungsbeispiel der Fig. 1 haben. A1-ternativ können diese Eingabetasten 16 und 18 und die Bildschirmanzeige 20 auch weggelassen werden und stattdessen nur ein optisches oder akustisches Leuchtmittel vorgesehen werden.

Die gesamte Vorrichtung kann mit Solarzellen und/oder Batterien mit Strom versorgt werden.

## Patentansprüche

1. Vorrichtung zum Messen der von einer Person in einem vorgegebenen Zeitraum, wie ein Tag, getrunkenen Flüssigkeitsmenge, mit:
- einem Wägemittel (22) zum Messen des Gewichtes eines Flüssigkeitbehältnis (38) mit einer darin aufgenommenen Flüssigkeit,
- einer mit dem Wägemittel (22) gekoppelten Auswerteeinrichtung (24), die derart eingerichtet ist, daß sie die aus dem Flüssigkeitsbehältnis (38) getrunkene Flüssigkeitsmenge anhand des gemessenen Gewichtes des Flüssigkeitsbehältnis (38) mit darin aufgenommener Flüssigkeit und anhand des gemessenen Gewichtes des vollständig oder teilweise leeren Flüssigkeitsbehältnis (38) ermittelt, und daß sie die so ermittelten Flüssigkeitsmengen im vorgegebenen Zeitraum zu einer getrunkenen Gesamtflüssigkeitsmenge kumuliert, und
- einem mit der Auswerteeinrichtung (24) gekoppelten Ausgabemittel (20) zum Ausgeben der kumulierten Gesamtflüssigkeitsmenge.

2. Vorrichtung nach Anspruch 1, bei der die Auswerteeinrichtung (24) ferner derart eingerichtet ist, daß sie die getrunkene Gesamtflüssigkeitsmenge mit einer für diesen vorgegebenen Zeitraum empfohlenen Gesamtflüssigkeitsmenge vergleicht und das Vergleichsergebnis über das Ausgabemittel (20) ausgibt.

3. Vorrichtung nach Anspruch 1 oder 2, die ein mit der Auswerteeinrichtung (24) gekoppeltes Eingabemittel (8-18) zum Eingeben von Daten aufweist, mit denen die Auswerteeinrichtung (24) die kumulierte Gesamtflüssigkeitsmenge und/oder die empfohlene Gesamtflüssigkeitsmenge ermittelt.

4. Vorrichtung nach Anspruch 3, bei der die eingebbaren Daten Information umfassen, mit denen zwischen der Messung des Gewichtes des Flüssigkeitsbehältnis (38) mit darin aufgenommener Flüssigkeit und der Messung des Gewichtes des vollständig oder teilweise leeren Flüssigkeitsbehältnis (38) unterschieden wird.

5. Vorrichtung nach Anspruch 3 oder 4, bei der die eingebbaren Daten das Alter, das Gewicht, das Geschlecht, die Tätigkeit und/oder die Aufsteh- und Einschlafzeit der Person umfassen, mit denen die Auswerteeinrichtung (24) die empfohlene Gesamtflüssigkeitsmenge ermittelt.

6. Vorrichtung nach einem der Ansprüche 3 bis 5, die für die Benutzung von mehreren Personen ausgestaltet ist, deren Flüssigkeitsaufnahmen überwacht werden sollen, bei der die eingebbaren Daten die Auswahl einer bestimmten Person umfassen.

7. Vorrichtung nach einem der Ansprüche 3 bis 6, bei der die eingebbaren Daten Flüssigkeitsmengen umfassen, die eine Person innerhalb des vorgegebenen Zeitraums getrunken hat.

8. Vorrichtung nach einem der vorhergehenden Ansprüche, bei der die Auswerteeinrichtung (24) ferner derart ausgestaltet ist, daß sie die durchschnittlich getrunkene Flüssigkeitsmenge ausgibt.

9. Vorrichtung nach einem der vorhergehenden Ansprüche, bei der die Auswerteeinrichtung (24) ferner derart ausgestaltet ist, daß sie die Verteilung der von der Person aufgenommenen Flüssigkeitsmenge über den vorgegebenen Zeitraum ausgibt.

10. Vorrichtung nach einem der vorhergehenden Ansprüche, die eine mit der Auswerteeinrichtung (24) gekoppelte Schnittstelle (34) zum Übertragen von Daten zwischen der Auswerteeinrichtung ((24) und der externen Rechnereinheit aufweist.

11. Vorrichtung nach Anspruch 10, bei der die Auswerteeinrichtung (24) derart eingerichtet ist, daß sie die Meßdaten über die getrunkene Flüssigkeitsmenge über die externe Schnittstelle (34) an eine externe Rechnereinheit übertragen kann.

12. Vorrichtung nach Anspruch 10 oder 11, bei der die Schnittstelle (34) derart eingerichtet ist, daß sie Daten von einer externen Meßeinrichtung, wie ein Herzfrequenzmesser, empfangen kann, und bei der die Auswerteeinrichtung (24) derart eingerichtet ist, daß sie die empfohlene Gesamtflüssigkeitsmenge aus den empfangenen Daten ermittelt.

13. Vorrichtung nach einem der vorhergehenden Ansprüche, die ferner ein Temperaturmeßmittel (26) zum Messen der Außentemperatur aufweist, wobei die Auswerteeinrichtung (24) derart eingerichtet ist, daß sie die empfohlene Gesamtflüssigkeitsmenge aus der gemessenen Außentemperatur ermittelt.

14. Vorrichtung nach einem der vorhergehenden Ansprüche, die ferner ein Luftfeuchtigkeitsmeßmittel (28) zum Messen der Außenluftfeuchtigkeit aufweist, wobei die Auswerteeinrichtung (24) derart eingerichtet ist, daß sie die empfohlene Gesamtflüssigkeitsmenge aus der gemessenen Außenluftfeuchtigkeit ermittelt.

15. Vorrichtung nach einem der vorhergehenden Ansprüche, die ein mit der Auswerteeinrichtung (24) gekoppeltes Behälteridentifizierungmittel (30) zum Identifizieren eines bestimmten Flüssigkeitsbehältnis aufweist, wobei die Auswerteeinrichtung (24) derart eingerichtet ist, daß sie die ermittelten Flüssigkeitsmengen abhängig vom identifizierten Flüssigkeitsbehältnis kumuliert.

16. Vorrichtung nach einem der vorhergehenden Ansprüche, die in ein Trinkbehältnis (38) integriert ist.

17. Verfahren zum Messen der von einer Person in einem vorgegebenen Zeitraum, wie ein Tag, getrunkenen Flüssigkeitsmenge, bei dem
- das Gewicht eines Flüssigkeitsbehältnis (38) mit darin aufgenommener Flüssigkeit und das Gewicht des vollständig oder teilweise leeren Flüssigkeitsbehältnis (38) gemessen wird,
- die getrunkene Flüssigkeitsmenge aus der gemessenen Gewichtsdifferenz abgeleitet wird, und
- die abgeleitete Flüssigkeitsmenge im vorgegebenen Zeitraum kumuliert und ausgegeben wird.

18. Verfahren nach Anspruch 17, bei dem die getrunkene Gesamtflüssigkeitmenge mit einer für den vorgegebenen Zeitraum empfohlenen Gesamtflüssigkeitsmenge verglichen und das Vergleichsergebnis ausgegeben wird.

19. Verfahren nach Anspruch 17 oder 18, bei dem eingegeben wird, ob das Gewicht des Flüssigkeitsbehältnis (38) mit darin aufgenommener Flüssigkeit oder das Gewicht des vollständig bzw. teilweise leeren Flüssigkeitsbehältnis (38) gemessen werden soll.

20. Verfahren nach einem der Ansprüche 17 bis 20, bei dem das Alter, das Gewicht, das Geschlecht, die Tätigkeit und/oder die Aufsteh- und Einschlafzeit der Person eingegeben wird, und die empfohlene Gesamtflüssigkeitsmenge aus diesen eingegebenen Daten ermittelt wird.

21. Verfahren nach einem der Ansprüche 17 bis 20, bei dem für mehrere Personen, deren Flüssigkeitsaufnahme überwacht werden soll, ausgewählt wird, wessen getrunkene Flüssigkeitsmenge gemessen werden soll.

22. Verfahren nach einem der Ansprüche 17 bis 21, bei dem Flüssigkeitsmengen eingegeben werden, die eine Person innerhalb des vorgegebenen Zeitraums getrunken hat.

23. Verfahren nach einem der Ansprüche 17 bis 22, bei dem eine durchschnittlich getrunkene Flüssigkeitsmenge ausgegeben wird.

24. Verfahren nach einem der Ansprüche 17 bis 23, bei dem die Verteilung der von der Person getrunkenen Flüssigkeitsmenge über den vorgegebenen Zeitraum ausgegeben wird.

25. Verfahren nach einem der Ansprüche 17 bis 24, bei dem die Meßdaten über die getrunkene Flüssigkeitsmenge an eine externe Rechnereinheit übertragen werden, wo die Meßdaten hinsichtlich einer Beurteilung der richtigen Flüssigkeitsaufnahme ausgewertet werden.

26. Verfahren nach einem der Ansprüche 17 bis 25, bei dem Daten von einer externen Meßeinrichtung, wie ein Herzfrequenzmesser, empfangen werden, und die empfohlene Gesamtflüssigkeitsmenge aus den empfangenen Daten ermittelt wird.

27. Verfahren nach einem der Ansprüche 17 bis 26, bei dem die Außentemperatur gemessen wird und die empfohlene Gesamtflüssigkeitsmenge aus der gemessenen Außentemperatur ermittelt wird.

28. Verfahren nach einem der Ansprüche 17 bis 27, bei dem die Außenluftfeuchtigkeit gemessen wird und die empfohlene Gesamtflüssigkeitsmenge aus der gemessenen Außenluftfeuchtigkeit ermittelt wird.

29. Verfahren nach einem der Ansprüche 17 bis 28, bei dem Flüssigkeitsbehältnisse identifiziert werden und die ermittelten Flüssigkeitsmengen abhängig vom identifizierten Flüssigkeitsbehältnis kumuliert werden.
